(19) **Europäisches Patentamt**
**European Patent Office**
**Office européen des brevets**

(11) **EP 2 586 885 B1**

(12) **EUROPEAN PATENT SPECIFICATION**

(45) Date of publication and mention
of the grant of the patent:
**19.06.2019 Bulletin 2019/25**

(21) Application number: **11798291.8**

(22) Date of filing: **23.06.2011**

(51) Int Cl.:
**C22C 38/14** (2006.01)    **C22C 38/54** (2006.01)
**C21D 8/02** (2006.01)    **C21D 9/46** (2006.01)

(86) International application number:
**PCT/JP2011/064988**

(87) International publication number:
**WO 2011/162412 (29.12.2011 Gazette 2011/52)**

(54) **HIGH-STRENGTH HOT-ROLLED STEEL SHEET HAVING EXCELLENT STRETCH FLANGEABILITY AND METHOD FOR PRODUCING SAME**

HOCHFESTES HEISSGEWALZTES STAHLBLECH VON HERVORRAGENDER STRECKBARKEIT SOWIE VERFAHREN ZU SEINER HERSTELLUNG

TÔLE D'ACIER LAMINÉE À CHAUD HAUTEMENT RÉSISTANTE PRÉSENTANT UNE EXCELLENTE CAPACITÉ À FORMER DES BORDS PAR ÉTIRAGE ET SON PROCÉDÉ DE PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.06.2011 JP 2011137680**
**25.06.2010 JP 2010145414**

(43) Date of publication of application:
**01.05.2013 Bulletin 2013/18**

(73) Proprietor: **JFE Steel Corporation**
**Tokyo, 100-0011 (JP)**

(72) Inventors:
• **FUNAKAWA, Yoshimasa**
**Tokyo 100-0011 (JP)**

• **ARIGA, Tamako**
**Tokyo 100-0011 (JP)**
• **MORIYASU, Noriaki**
**Tokyo 100-0011 (JP)**
• **MURATA, Takayuki**
**Tokyo 100-0011 (JP)**

(74) Representative: **Hoffmann Eitle**
**Patent- und Rechtsanwälte PartmbB**
**Arabellastraße 30**
**81925 München (DE)**

(56) References cited:
**EP-A1- 1 327 695        JP-A- 2000 328 186**
**JP-A- 2002 322 539        JP-A- 2005 154 809**
**JP-A- 2009 052 139        US-A1- 2008 196 799**

**Description**

[Technical Field]

The present invention relates to a high strength hot-rolled steel sheet which is suitable for parts of transportation machinery including automobiles and structural steels such as construction steels and which combines high strength, a tensile strength (TS) of 780 MPa or more, with excellent stretch-flange formability and also relates to a method for manufacturing the same.

[Background Art]

In order to reduce $CO_2$ emissions from the viewpoint of global environmental protection, improving fuel consumption by reducing the weight of automotive bodies with the strength thereof maintained is always a key issue for automotive industries. The gauge reduction of steel sheets, having high strength, used to manufacture automotive parts is effective in reducing the weight of automotive bodies with the strength thereof maintained.

On the other hand, since most of automotive parts made from steel sheets are formed by pressing or burring, steel sheets for automotive parts need to have excellent ductility and stretch-flange formability. Therefore, such steel sheets for automotive parts are valued in strength and workability and high-strength steel sheets having excellent workability including stretch-flange formability are demanded.

A great deal of research and development has been carried out on high-strength steel sheets combining strength with workability up to now. However, it is not easy to impart workability including stretch-flange formability to high-strength steel sheets without impairing the strength thereof because, in general, steel materials having higher strength have lower workability. For example, the following technique is known: a technique for obtaining a high-strength steel sheet having excellent ductility by transforming the microstructure of a steel sheet into a multi-phase microstructure in which a hard low-temperature transformed phase such as martensite is dispersed in soft ferrite. This technique appropriately adjusts the amount of martensite dispersed in ferrite to achieve both high strength and high ductility. However, a steel sheet having such a multi-phase microstructure has a problem that when a punched portion is expanded, that is, stretch flange forming is performed, the steel sheet is likely to crack because cracks arise from the interface between soft ferrite and a hard low-temperature transformed phase such as martensite. That is, a multi-phase high-strength steel sheet containing soft ferrite and a hard low-temperature transformed phase such as martensite cannot achieve sufficient stretch-flange formability.

Patent Literature 1 proposes a technique for enhancing the stretch-flange formability of a high strength hot-rolled steel sheet having a tensile strength of 500 N/mm$^2$ or more by transforming the microstructure of the steel sheet into a microstructure principally containing bainitic ferrite or a microstructure containing ferrite and bainitic ferrite. The steel sheet contains 0.03% to 0.20% C, 0.2% to 2.0% Si, 2.5% or less Mn, 0.08% or less P, and 0.005% or less S on a weight basis. According to this technique, high stretch-flange formability can be imparted to high-strength steel by producing a bainitic ferrite microstructure which has a lath structure, which contains no carbide, and which is high in dislocation density in steel. The production of a ferrite microstructure having a small number of dislocations, high ductility, and good stretch-flange formability together with the bainitic ferrite microstructure allows the strength and the stretch-flange formability to be good.

Patent Literature 2, which does not focus only on stretch-flange formability, proposes a technique for enhancing the fatigue strength and stretch-flange formability of a high strength hot-rolled steel sheet with a tensile strength (TS) of 490 MPa or more. The high strength hot-rolled steel sheet contains 0.01% to 0.10% C, 1.5% or less Si, more than 1.0% to 2.5% Mn, 0.15% or less P, 0.008% or less S, 0.01% to 0.08% Al, 0.0005% to 0.0030% B, and one or both of Ti and Nb, the sum of the contents of Ti and Nb being 0.10% to 0.60%, on a weight basis and has a ferrite content of 95% or more in terms of area fraction, an average ferrite grain size of 2.0 μm to 10.0 μm, and a microstructure containing no martensite or retained austenite.

Patent Literature 3 proposes a technique for ensuring the bending workability and weldability of a hot-rolled steel sheet with a tensile strength (TS) of 950 N/mm$^2$ (950 MPa) or more. The hot-rolled steel sheet contains 0.05% to 0.15% C, 1.50% or less Si, 0.70% to 2.50% Mn, 0.25% to 1.5% Ni, 0.12% to 0.30% Ti, 0.0005% to 0.0030% B, 0.020% or less P, 0.010% or less S, 0.010% to 0.10% sol. Al, and 0.0050% or less N on a weight basis; has a ferrite grain size of 10 μm or less; and contains TiC precipitates with a size of 10 nm or less and iron carbide precipitates with a size of 10 μm or less. According to this technique, the refining of ferrite grains and TiC and the adjustment of the content of Mn to 0.70% or more enhance the strength and bending workability of the steel sheet.

Patent Literature 4 proposes a technique for obtaining a hot-rolled steel sheet having excellent stretch-flange formability and a tensile strength (TS) of 70 kgf/mm$^2$ (686 MPa) or more. The hot-rolled steel sheet contains 0.02% to 0.10% C, 2.0% or less Si, 0.5% to 2.0% Mn, 0.08% or less P, 0.006% or less S, 0.005% or less N, 0.01% to 0.1% Al, and 0.06% to 0.3% Ti on a weight basis, the content of Ti satisfying $0.50 < (Ti - 3.43N - 1.5S) / 4C$, and has a microstructure in which the area fraction of each of a low-temperature transformed phase and pearlite is 15% or less and in which TiC is dispersed in polygonal ferrite. According to this technique, most of the microstructure of the steel sheet is polygonal ferrite, which contains a small amount of solute C, and increased tensile strength (TS) and excellent stretch-flange formability are achieved due to the precipitation hardening of TiC and the solid solution hardening of Mn (the content thereof is 0.5% or more) and P.

Patent Literature 5 proposes a thin steel sheet which substantially consists of a matrix with a ferrite single-phase microstructure and fine precipitates, dispersed in the matrix, having a grain size of less than 10 nm and which has a tensile strength of 550 MPa or more and excellent press formability. In this technique, a composition preferably contains less than 0.10% C, 0.03% to 0.10% Ti, and 0.05% to 0.6% Mo and Fe is a major component thereof. This allows the thin steel sheet to have high strength, good hole expanding ratio, and good total elongation. Furthermore, an example containing 0.04% to 0.08% Si and 1.59% to 1.67% Mn is disclosed.

Patent Literature 6 relates to a thin ferritic steel sheet excellent in shape fixability and containing, in terms of weight %, C: 0.001 to 0.3 %, Si: 0.001 to 3.5 %, Mn: less than 3 %, P: 0.005 to 0.15 %, S: less than 0.03 %, Al: 0.01 to 3.0 %, N: less than 0.01 %, 0: less than 0.01 %, optionally at least one element selected from the group consisting of Ti: less than 0.20 %, Nb: less than 0.20 %, V: less than 0.20 %, Cr: less than 1.5 %, B: less than 0.007 %, Mo: less than 1 %, Cu: less than 3 %, Ni: less than 3 %, Sn: less than 0.3 %, Co: less than 3 %, Ca: 0.0005 to 0.005 %, and REM: 0.001 to 0.02 % and remainder Fe and unavoidable impurities.

[Citation List]

[Patent Literature]

[PTL 1] Japanese Unexamined Patent Application Publication No. 6-172924
[PTL 2] Japanese Unexamined Patent Application Publication No. 2000-328186
[PTL 3] Japanese Unexamined Patent Application Publication No. 8-73985
[PTL 4] Japanese Unexamined Patent Application Publication No. 6-200351
[PTL 5] Japanese Unexamined Patent Application Publication No. 2002-322539
[PTL 6] European Patent Application Publication EP 1 327 695 A1

[Summary of Invention]

[Technical Problem]

However, in the technique proposed in Patent Literature 1, a further increase in strength cannot be expected when the content of ferrite is large. In the case of a multi-phase microstructure containing a hard second phase instead of ferrite for an increase in strength, there is a problem in that cracks are likely to arise from the interface between bainitic ferrite and the hard second phase to cause cracking during stretch flange forming and stretch-flange formability is reduced like the ferrite-martensite dual-phase steel sheet.

In the technique proposed in Patent Literature 2, the stretch-flange formability of a steel sheet is enhanced by refining crystal grains; however, the tensile strength (TS) of an obtained steel sheet is about 680 MPa at most (see an example described in Patent Literature 1). There is a problem in that a further increase in strength cannot be expected.

In the technique proposed in Patent Literature 3, the bending workability of a steel sheet is discussed; however, the stretch-flange formability of the steel sheet is not discussed. Since bending is different in mode from hole expanding (stretch flange forming) and therefore required properties of a steel sheet are different between bending workability and stretch-flange formability, there is a problem in that a high-strength steel sheet having excellent bending workability does not necessarily has good stretch-flange formability.

In the technique proposed in Patent Literature 4, a large amount of Mn and Si are contained for an increase in strength and therefore it is difficult to stably obtain a polygonal ferrite-based microstructure. Furthermore, there is a problem in that stretch-flange formability tends to be deteriorated because serious segregation occurs during casting and therefore cracks are caused along the segregation during working.

In the technique proposed in Patent Literature 5, cracks are likely to be caused due to the segregation of Mn during working since an example containing 1.59% to 1.67% Mn is described. There is a problem in that it is difficult for this technique to stably ensure excellent stretch-flange formability.

As described above, transforming the microstructure of a steel sheet into a multi-phase microstructure is not preferable in view of stretch-flange formability. Transforming the microstructure of a steel sheet into a ferrite single-phase microstructure improves stretch-flange formability. It is difficult for a conventional ferritic steel sheet to ensure high strength with excellent stretch-flange formability maintained.

The present invention has an object to provide a high strength hot-rolled steel sheet which advantageously solves the problems associated with the above conventional techniques and which has a tensile strength (TS) of 780 MPa or more and excellent stretch-flange formability and has an object to provide a method for manufacturing the same.

[Solution to Problem]

In order to solve the above problems, the inventors have intensively investigated various factors affecting the increase in strength and stretch-flange formability of a hot-rolled steel sheet with a ferrite single-phase microstructure. As a result, the inventors have found that Mn and Si, which serve as solid solution hardening elements effective in increasing the strength of steel sheets and are actively contained in high strength hot-rolled steel sheets, adversely affect stretch-flange formability.

Therefore, the inventors have observed the microstructure of (hot-rolled) steel sheets containing an increased amount of Mn and Si, resulting in the confirmation that the fluctuation in concentration of Mn (pearlite or a different microstructure due to the segregation of Mn) is present in a thicknesswise central portion of a steel sheet. This has led to the finding that the different microstructure adversely affects stretch-flange formability. The inventors have found that, with regard to the composition (hot-rolled) steel sheets, the different microstructure can be suppressed by adjusting the content of Mn and the content of Si to a predetermined level. The inventors have also found that the active addition of B shifts and delays the austenite ($\gamma$)-ferrite ($\alpha$) transformation to lower temperature and therefore the formation of the different microstructure or pearlite can be readily suppressed.

On the other hand, the reduction in content of Mn and Si, which are solid solution hardening elements, cannot avoid the reduction in strength of steel sheets. Therefore, the inventors have attempted use precipitation hardening by titanium carbides as a hardening mechanism instead of solid solution hardening by Mn and Si. The effect of greatly increasing the strength of steel sheets can be expected by finely precipitating Ti carbides in the steel sheets. However, Ti carbides are likely to be coarsened and therefore it is difficult to maintain Ti carbides precipitated in a steel sheet in a fine state; hence, no sufficient strength-increasing effect has been obtained.

The inventors have made further investigations to explore ways to precipitate Ti carbides in steel sheets in a fine state. As a result, the inventors have found that solute B is effective in suppressing the coarsening of the Ti carbides. Solute B segregates around the Ti carbides, suppresses the coarsening of the Ti carbides, and refines the Ti carbides. That is, the inventors have found that when a steel sheet contains a desired amount of solute B, the diffusion of Ti is suppressed, the Ti carbides can be refined, and precipitation hardening by titanium carbides functions as an effective hardening mechanism instead of solid solution hardening by Mn and Si.

Although the reason why a different microstructure due to the segregation of Mn present in a thicknesswise central portion of a (hot-rolled) steel sheet adversely affects stretch-flange formability is not necessarily clear, the inventors speculate as follows: in the case of punching a hole and then performing stretch flange forming to expand the hole, the presence of the different microstructure in the central portion is likely to cause initial cracking therearound to cause cracks extending in a thickness direction of the steel sheet during subsequent working (hole expanding) and therefore the hole expanding ratio is probably reduced.

The present invention has been completed on the basis of the above findings and the scope thereof is as described below.

(1) A high strength hot-rolled steel sheet with excellent stretch-flange formability has a composition consisting of, on a mass basis, more than 0.035% to 0.055% C, 0.2% or less Si, 0.35% or less Mn, 0.03% or less P, 0.03% or less S, 0.1% or less Al, 0.01% or less N, 0.08% to 0.25% Ti, and 0.0005% to 0.0035% B, solute B being 0.0005% or more, and optionally in total 1.0% or less of one or more of REMs, Zr, Nb, V, As, Cu, Ni, Sn, Pb, Ta, W, Mo, Cr, Sb, Mg, Ca, Co, Se, Zn, and Cs, the remainder being Fe and unavoidable impurities; a matrix containing a ferrite phase having an area fraction of more than 95%; a microstructure in which Ti carbides having an average grain size of less than 10 nm are finely precipitated in grains of the ferrite phase and the volume fraction of the Ti carbides is 0.0015 to 0.007; and a tensile strength of 780 MPa or more.

(2) In Item (1), the high strength hot-rolled steel sheet includes a plating layer on a surface of a steel sheet.

(3) A method for manufacturing the high strength hot-rolled steel sheet of Item (1) includes heating steel to an austenite single-phase zone, performing hot rolling including rough rolling and finish rolling, performing cooling after finish rolling is finished, performing coiling, and obtaining a hot-rolled steel sheet. The steel has a composition consisting of, on a mass basis, more than 0.035% to 0.055% C, 0.2% or less Si, 0.35% or less Mn, 0.03% or less P, 0.03% or less S, 0.1% or less Al, 0.01% or less N, 0.08% to 0.25% Ti, and 0.0005% to 0.0035% B, and optionally in total 1.0% or less of one or more of REMs, Zr, Nb, V, As, Cu, Ni, Sn, Pb, Ta, W, Mo, Cr, Sb, Mg, Ca, Co, Se, Zn, and Cs, the remainder being Fe and unavoidable impurities. The finish rolling temperature during finish rolling is 850°C or higher. The average cooling rate during cooling is 10 °C/s or more. The coiling temperature is 550°C to 680°C.

(4) In Item (3), the high strength hot-rolled steel sheet-manufacturing method further includes plating the hot-rolled steel sheet.

(5) In Item (4), the high strength hot-rolled steel sheet-manufacturing method further includes alloying the hot-rolled steel sheet subsequently to plating.

[Advantageous Effects of Invention]

According to the present invention, the following steel sheet is obtained: a high strength hot-rolled steel sheet which is suitable for parts of transportation machinery including automobiles and structural steels such as construction steels and which combines high strength, a tensile strength (TS) of 780 MPa or more, with excellent stretch-flange formability. Applications of the high strength hot-rolled steel sheet can be developed. This is particularly advantageous for industrial purposes.

[Brief Description of Drawings]

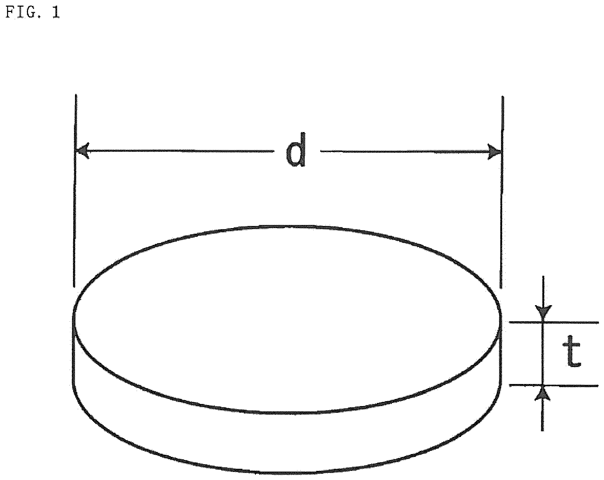

Fig. 1 is an illustration schematically showing the shape of a Ti carbide precipitate.

[Description of Embodiments]

The present invention will now be described in detail.

A hot-rolled steel sheet according to the present invention has substantially a ferrite single-phase microstructure and is characterized in that the stretch-flange formability of the steel sheet is enhanced in such a manner that Mn and Si are rendered harmless by reducing the segregation of Mn and Si in a thicknesswise central portion of the steel sheet through the reduction in content of Mn and Si in the steel sheet. Furthermore, the hot-rolled steel sheet according to the present invention is characterized in that the strength of the steel sheet is increased in such a manner that a desired amount of fine Ti carbides are precipitated and the growth and coarsening of the fine Ti carbides are suppressed by segregating solute B around the fine Ti carbides.

First, the reason for limiting the microstructure of the steel sheet according to the present invention is described.

The hot-rolled steel sheet according to the present invention has a matrix containing a ferrite phase having an area fraction of more than 95% and also has a microstructure in which Ti carbides having an average grain size of less than 10 nm are finely precipitated in grains of the ferrite phase and the volume fraction of the Ti carbides is 0.0015 to 0.007.

Ferrite phase: an area fraction of more than 95%

In the present invention, the formation of the ferrite phase is essential in ensuring the stretch-flange formability of the hot-rolled steel sheet. For the increase in ductility and stretch-flange formability of the hot-rolled steel sheet, it is effective that the matrix texture of the hot-rolled steel sheet contains the ferrite phase, which has low dislocation density and excellent ductility. In particular, for the increase in stretch-flange formability thereof, the matrix texture of the hot-rolled steel sheet is preferably a ferrite single-phase. Even if the matrix texture thereof is not a complete ferrite single-phase but is substantially a ferrite single-phase, that is, if the area fraction of the ferrite phase in the matrix texture is more than 95%, the above effect is sufficiently exhibited. Thus, the area fraction of the ferrite phase is more than 95%. The area fraction thereof is preferably 97% or more.

In the hot-rolled steel sheet according to the present invention, examples of a texture other than the ferrite phase, which is contained in the matrix, include cementite, pearlite, a bainite phase, a martensite phase, and a retained austenite phase. The presence of these textures in the matrix causes a reduction in stretch-flange formability. It is acceptable that the total area fraction of these textures in the matrix texture is less than 5%. The total area fraction thereof is preferably 3% or less.

Ti carbides

In the hot-rolled steel sheet according to the present invention, the content of each of Mn and Si, which are solid solution hardening elements, is reduced for the purpose of suppressing the segregation of Mn and Si, which adversely affect stretch-flange formability, in the thicknesswise central portion of the steel sheet as described above; hence, the increase in strength of the steel sheet by solid solution hardening cannot be expected. Therefore, in the hot-rolled steel sheet according to the present invention, finely precipitating the Ti carbides in grains of the ferrite phase is essential in ensuring the strength thereof.

Average grain size of Ti carbides: less than 10 nm

The average grain size of the Ti carbides is extremely important in imparting a desired strength (a tensile strength of 780 MPa or more) to the hot-rolled steel sheet. In the present invention, the average grain size of the Ti carbides is less than 10 nm. In the case where the Ti carbides are finely precipitated in grains of the ferrite phase, the Ti carbides act as resistance to the migration of dislocations induced by the deformation of the steel sheet and therefore the hot-rolled steel sheet has increased strength. However, precipitation hardening due to the Ti carbides lowers with the coarsening of the Ti carbides. When the average grain size of the Ti carbides is 10 nm or more, a steel sheet-hardening effect sufficient to compensate for the reduction in strength of the steel sheet due to the reduction in content of Mn and Si, which are solid solution hardening elements, is not obtained. Thus, the average grain size of the Ti carbides is less than 10 nm. The average grain size thereof is more preferably 6 nm or less.

In the present invention, it has been confirmed that the Ti carbides have substantially a disc shape (a circular plate shape) as schematically shown in Fig. 1. In the present invention, the average grain size $d_{def}$ of the Ti carbides is defined (measured) as the arithmetic mean, $d_{def} = (d + t) / 2$, of the maximum size d (the diameter of the largest of disc upper and lower surfaces) of an observed substantially disc-shaped precipitate and the size (thickness) t of the substantially disc-shaped precipitate in a direction perpendicular to the disc upper or lower surface.

Volume fraction of Ti carbides: 0.0015 to 0.007

The dispersion state of the Ti carbides is extremely important in imparting a desired strength (a tensile strength of 780 MPa or more) to the hot-rolled steel sheet. In the present invention, the Ti carbides, which have an average grain size of less than 10 nm, are finely precipitated in grains of the ferrite phase such that the volume fraction of the Ti carbides in the microstructure of the steel sheet is 0.0015 to 0.007, that is, 0.15% to 0.7%. When the volume fraction thereof is less than 0.0015, the amount of precipitates is too small to impart a desired strength (a tensile strength of 780 MPa or more) to the hot-rolled steel sheet even if the average grain size of the Ti carbides is less than 10 nm. In contrast, when the volume fraction thereof is more than 0.007, the steel sheet has excessively high strength and therefore has deteriorated stretch-flange formability. Thus, the volume fraction thereof is 0.0015 to 0.007. The volume fraction thereof is preferably 0.002 to 0.005 and more preferably 0.003 to 0.005.

In the present invention, the morphology of the Ti carbides, which are finely precipitated, is observed to be linear in some cases. However, in the plane containing lines of linear precipitates, the precipitates are precipitated at random. The precipitates are observed to be not linear in many cases when being actually observed with a transmission electron microscope.

The reason for limiting the composition of the hot-rolled steel sheet according to the present invention is described below. Hereinafter, "%" used to describe the composition thereof is on a mass basis unless otherwise specified.

C: more than 0.035% to 0.055%

C is a component essential in forming the Ti carbides in the steel sheet to harden the hot-rolled steel sheet. When the content of C is 0.035% or less, a desired volume fraction of the Ti carbides cannot be ensured and therefore a tensile strength of 780 MPa or more is not achieved. In contrast, when the content of C is more than 0.055%, the tensile strength is excessively high and the ductility (elongation) is low. Thus, the content of C is more than 0.035% to 0.055%. The content thereof is preferably 0.04% to 0.05%.

Si: 0.2% or less

Si is an element effective in increasing the strength of the steel sheet without causing a reduction in ductility (elongation) and is actively contained in common high-strength steel sheets. However, Si promotes the segregation of Mn in the thicknesswise central portion of the hot-rolled steel sheet according to the present invention, whereas the segregation of Mn should be avoided. Si itself is a segregating element. Thus, in the present invention, the content of Si is limited to 0.2% or less for the purpose of suppressing the segregation of Mn and the segregation of Si. The content thereof is preferably 0.1% or less and more preferably 0.05% or less.

Mn: 0.35% or less

Mn is a solid solution hardening element. Mn, as well as Si, is actively contained in common high-strength steel sheets. However, if Mn is actively contained in a steel sheet, the segregation of Mn in a thicknesswise central portion of the steel sheet cannot be avoided, which causes the deterioration in stretch-flange formability of the steel sheet. Thus, in the present invention, the content of Mn is limited to 0.35% or less for the purpose of suppressing the segregation of Mn. The content thereof is preferably 0.3% or less and more preferably 0.25% or less.

P: 0.03% or less

P is a harmful element which segregates at grain boundaries to cause a reduction in elongation and which causes cracking during working. Thus, the content of P is 0.03%. The content thereof is preferably 0.020% or less and more preferably 0.010% or less.

S: 0.03% or less

S is present in steel in the form of MnS and TiS and promotes the formation of voids during the punching of the hot-rolled steel sheet to cause a reduction in stretch-flange formability. Therefore, in the present invention, the content of S is preferably minimized and is 0.03% or less. The content thereof is preferably 0.01% or less and more preferably 0.003% or less.

Al: 0.1% or less

Al is an element acting as a deoxidizing agent. In order to obtain such an effect, 0.01% or more Al is preferably contained. When the content of Al is more than 0.1%, Al oxides remain in the steel sheet. The Al oxides are likely to coalesce and coarsen, which causes the deterioration of stretch-flange formability. Thus, the content of Al is 0.1% or less. The content thereof is preferably 0.065% or less.

N: 0.01% or less

N is a harmful element in the present invention and therefore the content thereof is preferably minimized. N combines with Ti to form TiN. When the content of N is more than 0.01%, the amount of formed TiN is large, which causes a reduction in stretch-flange formability. Thus, the content of N is 0.01% or less. The content thereof is preferably 0.006% or less.

Ti: 0.08% to 0.25%

Ti is an element essential in increasing the strength of the steel sheet by forming the Ti carbides. Ti combines with N to form TiN and therefore is also an element important in suppressing the precipitation of BN to ensure solute B below. When the content of Ti is less than 0.08%, it is difficult to ensure a desired strength (a tensile strength of 780 MPa or more) to the hot-rolled steel sheet. In contrast, when the content of Ti is more than 0.25%, the Ti carbides tend to coarsen and therefore it is difficult to ensure a desired strength (a tensile strength of 780 MPa or more) to the hot-rolled steel sheet. Thus, the content of Ti is 0.08% to 0.25%. The content thereof is preferably 0.15% to 0.20%.

B: 0.0005% to 0.0035%

B is an element which is present in the steel sheet in the form of solid solution and which suppresses the coarsening of the Ti carbides. When the content of B is less than 0.0005%, the desired amount of solute B below cannot be ensured. In contrast, when the content of B is more than 0.0035%, steel is likely to be hardened and it is difficult to allow the matrix of the steel sheet to have a ferrite single-phase microstructure. Thus, the content of B is 0.0005% to 0.0035%. The content thereof is preferably 0.0010% to 0.0025% and more preferably 0.0010% to 0.0020%.

Solute B: 0.0005% or more

Solute B is extremely important in suppressing the coarsening of the Ti carbides to increasing the strength of the hot-rolled steel sheet. The reason why solute B suppresses the coarsening of the Ti carbides is not necessarily clear but since solute B is likely to segregate at non-coherent interfaces between the Ti carbides and the matrix, solute B probably segregates around the Ti carbides to suppress the coarsening of the Ti carbides. When solute B is less than 0.0005%, the effect of suppressing the coarsening of the Ti carbides is not sufficiently obtained and it is difficult that the Ti carbides are finely precipitated at a desired average grain size (less than 10 nm) to provide a desired strength (a tensile strength of 780 MPa or more). Thus, solute B is 0.0005% or more. Solute B is preferably 0.0010% or more. From the viewpoint of allowing the matrix to be substantially a ferrite single-phase such that the ductility of ferrite is not deteriorated, solute B is preferably 0.0025% or less and more preferably 0.0020% or less.

In the steel sheet according to the present invention, components other than those described above are Fe and unavoidable impurities. The unavoidable impurities include Sb, Cu, Ni, As, Sn, and Pb. When the total content of these impurities is 0.2% or less, the above effects of the present invention are not adversely affected. Furthermore, Nb, V, Mo, W, Zr, Ta, Cr, Co, Se, and Zn or at least one of Ca, REMs, Mg, and Cs may possibly be contained. When the total content of one or more of these elements is 1.0% or less, the effects of the present invention are not adversely affected.

A plating layer may be provided on a surface of the steel sheet according to the present invention for the purpose of imparting corrosion resistance to the steel sheet. This does not impair the effects of the present invention. The type of the plating layer, which is provided on the steel sheet, is not particularly limited and may be electroplating, hot dipping, or the like. An example of hot dipping is galvanizing. Furthermore, galvannealing may be performed in such a manner that alloying is performed subsequently to plating.

A method for manufacturing the hot-rolled steel sheet according to the present invention is described below.

In the present invention, steel is heated to an austenite single-phase zone, is subjected to hot rolling including rough rolling and finish rolling, is cooled after finish rolling is finished, and is then coiled, whereby the hot-rolled steel sheet is obtained. This procedure is characterized in that the finish rolling temperature is 850°C or higher during finish rolling, the average cooling rate is 10 °C/s or more, and the coiling temperature is 550°C to 680°C. During cooling subsequent to finish rolling, cooling is preferably performed at an average cooling rate of 30 °C/s or more.

In the present invention, a process for producing steel is not particularly limited and may be a known production process using a steel converter, an electric furnace, or the like can be used. After the production thereof, a slab (steel) is preferably produced by a continuous casting process from the issue of production efficiency or the like. A slab may be produced by a known casting process such as an ingot casting-blooming process or a thin-slab continuous casting process. The production of the slab (steel) by the continuous casting process allows the effects of the present invention to be remarkable.

The steel obtained as described above is subjected to rough rolling and finish rolling. In the present invention, the steel is heated to the austenite single-phase zone prior to rough rolling. If the steel is not heated to the austenite single-phase zone prior to rough rolling, the remelting of the Ti carbides present in the steel does not proceed and therefore the fine precipitation of the Ti carbides is not achieved after rolling. Thus, the steel is heated to the austenite single-phase zone prior to rough rolling. The steel is preferably heated to 1,100 °C or higher. However, when the heating temperature of the steel is excessively high, the hardness of a surface portion of the steel sheet is likely to be reduced because a surface thereof is excessively oxidized, $TiO_2$ is produced, and therefore Ti is consumed. Therefore, the heating temperature thereof is preferably 1,300°C or lower. When the cast steel (slab) is at a temperature corresponding to the austenite single-phase zone before the steel is hot-rolled, the steel may be directly rolled without heating the steel.

Finish rolling temperature: 850°C or higher

The appropriate adjustment of the finish rolling temperature is important in ensuring the stretch-flange formability of the hot-rolled steel sheet. When the finish rolling temperature is lower than 850°C, a banded microstructure is likely to be formed in a site which is located in a thicknesswise central portion of the finally obtained hot-rolled steel sheet and in which Mn has segregated, resulting in the deterioration of stretch-flange formability. Thus, the finish rolling temperature is 850°C or higher. The finish rolling temperature is preferably 880°C or higher. From the viewpoint of preventing surface flaws or roughness due to secondary scale, the finish rolling temperature is preferably 950°C or lower.

Average cooling rate: 10 °C/s or more

In the present invention, the coarsening of the Ti carbides is suppressed by the segregation of solute B around the Ti carbides and therefore the Ti carbides have a desired average grain size (less than 10 nm) as described above. Herein, after the above finish rolling is finished, the Ti carbides precipitate subsequently to the transformation of the steel microstructure from austenite to ferrite. When the austenite-ferrite transformation temperature ($Ar_3$ transformation temperature) is higher than 680°C, the Ti carbides are likely to grow large and therefore it is difficult to allow solute B to segregate around the Ti carbides when the Ti carbides are small. Therefore, in the present invention, the average cooling rate from a temperature of 850°C or higher to 680°C is adjusted to 10 °C/s or more for the purpose of adjusting the austenite-ferrite transformation temperature ($Ar_3$ transformation temperature) to 680°C or lower after the finish rolling is finished. The average cooling rate is preferably 30 °C/s or more.

When the austenite-ferrite transformation temperature ($Ar_3$ transformation temperature) is higher than 680°C, it is difficult to allow solute B to segregate around the Ti carbides. This is probably because stain is caused around the Ti carbides, which are coarse, and therefore B cannot approach the Ti carbides (cannot diffuse).

In contrast, when the austenite-ferrite transformation temperature ($Ar_3$ transformation temperature) is 680°C or lower, B probably segregate around the Ti carbides because the upper and lower surfaces of each Ti carbide align with the matrix and B diffuses around the Ti carbides.

Coiling temperature: 550°C to 680°C

The appropriate adjustment of the coiling temperature is important in adjusting the austenite-ferrite transformation temperature ($Ar_3$ transformation temperature) to 680°C or lower and is important in allowing the hot-rolled steel sheet to have a desired matrix microstructure (the area fraction of the ferrite phase is more than 95%). When the coiling temperature is lower than 550°C, bainitic ferrite or bainite is likely to be formed and therefore it is difficult to allow the matrix to have substantially a ferrite single-phase microstructure. In contrast, when the coiling temperature is higher than 680°C, the steel sheet has reduced strength because it is difficult to allow solute B to segregate around the Ti carbides, the Ti carbides are likely to become coarse, and pearlite is likely to be formed. Thus, the coiling temperature is 550°C to 680°C. The coiling temperature is preferably 580°C to 650°C.

In the present invention, austenite-ferrite transformation is caused at a temperature of 680°C or lower after cooling subsequent to finish rolling as described above. Therefore, austenite-ferrite transformation is likely to occur at a temperature close to the coiling temperature and therefore the coiling temperature and the austenite-ferrite transformation temperature tend to substantially coincide with each other.

A temperature of 680°C to 550°C is preferably maintained for 60 s or more after finish rolling is finished, because the segregation of solute B is further promoted.

In the present invention, a plating layer may be formed on a surface of the hot-rolled steel sheet manufactured as described above in such a manner that the steel sheet is subjected to plating such as galvanizing. Furthermore, a galvannealing layer may be formed on a surface of the steel sheet in such a manner that alloying is performed after galvanizing.

[EXAMPLES]

Molten steels having a composition shown in Table 1 were produced by an ordinary known process and were then continuously cast into slabs (steels) with a thickness of 300 mm. Each of the slabs was heated to a temperature shown in Table 2, was roughly rolled, was finish-rolled at a finish rolling temperature shown in Table 2, was cooled from a temperature of 850°C to 680°C at an average cooling rate shown in Table 2 after finish rolling, and was then coiled at a coiling temperature shown in Table 2, whereby a hot-rolled steel sheet with a thickness of 2.3 mm was obtained. It was separately confirmed that the transformation from austenite to ferrite did not occur in steels other than Steel No. 22 during cooling before coiling.

Subsequently, the hot-rolled steel sheets obtained as described above were pickled, whereby surface scale was removed therefrom. Some (Steel Nos. 6 and 7) of the resulting hot-rolled steel sheets were immersed in a 480°C zinc plating bath (0.1% Al-Zn) and were thereby provided with a galvanizing layer with a mass per unit area of 45 g/cm$^2$, whereby galvanized steel sheets were obtained. Furthermore, some (Steel Nos. 8, 9, and 10) of the resulting hot-rolled steel sheets were provided with a galvanizing layer as described above and were then alloyed at 520°C, whereby galvannealed steel sheets were obtained.

[Table 1]

| Steel No. | Chemical components (mass percent) | | | | | | | | | | Remarks |
|---|---|---|---|---|---|---|---|---|---|---|---|
| | C | Si | Mn | P | S | Al | N | Ti | B | Others | |
| 1 | 0.003 | 0.02 | 0.25 | 0.012 | 0.0007 | 0.035 | 0.0031 | 0.160 | 0.0024 | | Comparative example |
| 2 | 0.037 | 0.02 | 0.25 | 0.013 | 0.0008 | 0.033 | 0.0032 | 0.167 | 0.0025 | | Inventive example |
| 3 | 0.042 | 0.01 | 0.26 | 0.012 | 0.0009 | 0.031 | 0.0033 | 0.165 | 0.0022 | | Inventive example |
| 4 | 0.051 | 0.02 | 0.26 | 0.012 | 0.0006 | 0.034 | 0.0031 | 0.166 | 0.0021 | | Inventive example |
| 5 | 0.080 | 0.02 | 0.27 | 0.012 | 0.0008 | 0.035 | 0.0031 | 0.167 | 0.0022 | | Comparative example |
| 6 | 0.039 | 0.04 | 0.21 | 0.008 | 0.0009 | 0.056 | 0.0045 | 0.178 | - | | Comparative example |
| 7 | 0.038 | 0.03 | 0.21 | 0.008 | 0.0009 | 0.057 | 0.0047 | 0.178 | 0.0012 | | Inventive example |
| 8 | 0.039 | 0.04 | 0.22 | 0.009 | 0.0008 | 0.056 | 0.0042 | 0.179 | 0.0021 | | Inventive example |
| 9 | 0.038 | 0.03 | 0.23 | 0.009 | 0.0009 | 0.058 | 0.0041 | 0.171 | 0.0028 | | Inventive example |
| 10 | 0.039 | 0.04 | 0.21 | 0.008 | 0.0009 | 0.056 | 0.0042 | 0.178 | 0.0065 | | Comparative example |
| 11 | 0.041 | 0.05 | 0.29 | 0.007 | 0.0018 | 0.031 | 0.0042 | 0.007 | 0.0015 | | Comparative example |
| 12 | 0.039 | 0.05 | 0.29 | 0.016 | 0.0012 | 0.031 | 0.0043 | 0.035 | 0.0014 | | Comparative example |
| 13 | 0.041 | 0.05 | 0.29 | 0.017 | 0.0014 | 0.031 | 0.0042 | 0.092 | 0.0014 | | Inventive example |
| 14 | 0.039 | 0.03 | 0.29 | 0.016 | 0.0013 | 0.039 | 0.0041 | 0.230 | 0.0014 | | Inventive example |
| 15 | 0.039 | 0.05 | 0.28 | 0.016 | 0.0012 | 0.032 | 0.0042 | 0.310 | 0.0014 | | Comparative example |
| 16 | 0.051 | 0.05 | 0.28 | 0.008 | 0.0005 | 0.067 | 0.0051 | 0.189 | 0.0022 | | Inventive example |
| 17 | 0.052 | 0.04 | 0.30 | 0.008 | 0.0005 | 0.069 | 0.0052 | 0.189 | 0.0025 | | Inventive example |
| 18 | 0.051 | 0.04 | 1.20 | 0.009 | 0.0005 | 0.065 | 0.0054 | 0.189 | 0.0022 | | Comparative example |
| 19 | 0.040 | 0.07 | 0.21 | 0.012 | 0.0009 | 0.029 | 0.0028 | 0.175 | 0.0018 | | Inventive example |
| 20 | 0.039 | 0.45 | 0.22 | 0.012 | 0.0009 | 0.028 | 0.0027 | 0.174 | 0.0019 | | Comparative example |
| 21 | 0.055 | 0.60 | 1.50 | 0.015 | 0.0010 | 0.025 | 0.0041 | 0.150 | - | | Comparative example |
| 22 | 0.050 | 0.68 | 1.59 | 0.01 7 | 0.0020 | 0.036 | 0.0041 | 0.220 | - | | Comparative example |
| 23 | 0.030 | 1.02 | 1.49 | 0.011 | 0.0010 | 0.028 | 0.0025 | 0.110 | - | | Comparative example |
| 24 | 0.041 | 0.05 | 0.15 | 0.012 | 0.0012 | 0.047 | 0.0035 | 0.152 | 0.0012 | Zn:0.0021 | Inventive example |

(continued)

| Steel No. | Chemical components (mass percent) | | | | | | | | | | Remarks |
|---|---|---|---|---|---|---|---|---|---|---|---|
| | C | Si | Mn | P | S | Al | N | Ti | B | Others | |
| 25 | 0.039 | 0.05 | 0.15 | 0.012 | 0.0013 | 0.048 | 0.0039 | 0.153 | 0.0012 | Cu:0.2, Ni:0.4 | Inventive example |
| 26 | 0.042 | 0.05 | 0.16 | 0.013 | 0.0014 | 0.045 | 0.0041 | 0.152 | 0.0011 | Sn:0.0098, Cu:0.08 | Inventive example |
| 27 | 0.041 | 0.05 | 0.15 | 0.01 2 | 0.0012 | 0.045 | 0.0038 | 0.155 | 0.0014 | Ca:0.0015 | Inventive example |
| 28 | 0.042 | 0.05 | 0.16 | 0.013 | 0.0012 | 0.046 | 0.0041 | 0.153 | 0.0012 | Mo:0.1, Cr:0.2 | Inventive example |
| 29 | 0.041 | 0.05 | 0.15 | 0.012 | 0.0012 | 0.047 | 0.0045 | 0.155 | 0.0014 | As:0.0015, Sb:0.02 | Inventive example |
| 30 | 0.051 | 0.07 | 0.25 | 0.024 | 0.0043 | 0.075 | 0.0046 | 0.215 | 0.0025 | Co:0.015 | Inventive example |
| 31 | 0.052 | 0.07 | 0.26 | 0.023 | 0.0044 | 0.085 | 0.0042 | 0.216 | 0.0022 | V:0.1, Nb:0.01 | Inventive example |
| 32 | 0.051 | 0.07 | 0.25 | 0.022 | 0.0046 | 0.075 | 0.0044 | 0.216 | 0.0024 | Zr:0.1, V:0.1 | Inventive example |
| 33 | 0.055 | 0.07 | 0.25 | 0.023 | 0.0045 | 0.078 | 0.0048 | 0.217 | 0.0022 | Mg:0.0055, Ta:0.05 | Inventive example |
| 34 | 0.038 | 0.02 | 0.25 | 0.023 | 0.0045 | 0.081 | 0.0041 | 0.142 | 0.0018 | Se:0.009 | Inventive example |
| 35 | 0.039 | 0.02 | 0.26 | 0.023 | 0.0046 | 0.081 | 0.0045 | 0.143 | 0.0019 | Ta:0.01, Pb:0.006 | Inventive example |
| 36 | 0.038 | 0.02 | 0.25 | 0.024 | 0.0044 | 0.082 | 0.0045 | 0.145 | 0.0018 | Mo:0.1 | Inventive example |
| 37 | 0.037 | 0.02 | 0.24 | 0.023 | 0.0046 | 0.087 | 0.0042 | 0.144 | 0.0019 | Mo:0.1, W:0.2 | Inventive example |
| 38 | 0.038 | 0.02 | 0.25 | 0.023 | 0.0048 | 0.088 | 0.0041 | 0.145 | 0.0018 | Cu:0.3, Ni:0.5, Sn:0.01 | Inventive example |
| 39 | 0.044 | 0.12 | 0.31 | 0.008 | 0.016 | 0.035 | 0.0055 | 0.163 | 0.0009 | Cs:0.01 | Inventive example |
| 40 | 0.045 | 0.12 | 0.32 | 0.007 | 0.016 | 0.035 | 0.0056 | 0.166 | 0.0009 | REM:0.05 | Inventive example |

[Table 2]

| Steel No. | Hot-rolling step | | | | Remarks |
|---|---|---|---|---|---|
| | Heating temperature (°C) | Finish rolling temperature (°C) | Average cooling rate (°C/s)*1 | Coiling temperature (°C) | |
| 1 | 1250 | 900 | 30 | 620 | Comparative example |
| 2 | 1250 | 900 | 30 | 620 | Inventive example |
| 3 | 1250 | 905 | 30 | 620 | Inventive example |
| 4 | 1250 | 900 | 30 | 620 | Inventive example |
| 5 | 1250 | 900 | 30 | 620 | Comparative example |
| 6 | 1220 | 880 | 50 | 640 | Comparative example |
| 7 | 1220 | 880 | 50 | 640 | Inventive example |
| 8 | 1220 | 880 | 50 | 640 | Inventive example |
| 9 | 1220 | 880 | 55 | 640 | Inventive example |
| 10 | 1220 | 880 | 50 | 640 | Comparative example |
| 11 | 1260 | 920 | 60 | 600 | Comparative example |
| 12 | 1260 | 920 | 60 | 600 | Comparative example |
| 13 | 1260 | 920 | 60 | 600 | Inventive example |
| 14 | 1260 | 920 | 60 | 600 | Inventive example |
| 15 | 1260 | 920 | 60 | 600 | Comparative example |
| 16 | 1280 | 910 | 25 | 600 | Inventive example |
| 17 | 1280 | 910 | 25 | 600 | Inventive example |
| 18 | 1280 | 910 | 25 | 600 | Comparative example |
| 19 | 1240 | 890 | 25 | 625 | Inventive example |
| 20 | 1240 | 890 | 30 | 625 | Comparative example |
| 21 | 1250 | <u>840</u> | 30** | 675 | Comparative example |

(continued)

| Steel No. | Hot-rolling step | | | | Remarks |
|---|---|---|---|---|---|
| | Heating temperature (°C) | Finish rolling temperature (°C) | Average cooling rate (°C/s)*1 | Coiling temperature (°C) | |
| 22 | 1200 | 880 | 30 | <u>500</u> | Comparative example |
| 23 | 1200 | 870 | 30 | <u>685</u> | Comparative example |
| 24 | 1230 | 890 | 30 | 650 | Inventive example |
| 25 | 1230 | 910 | 40 | 650 | Inventive example |
| 26 | 1230 | 900 | 30 | 650 | Inventive example |
| 27 | 1230 | 910 | 60 | 650 | Inventive example |
| 28 | 1230 | 900 | 70 | 650 | Inventive example |
| 29 | 1230 | 900 | 120 | 650 | Inventive example |
| 30 | 1260 | 925 | 80 | 660 | Inventive example |
| 31 | 1260 | 925 | 45 | 660 | Inventive example |
| 32 | 1260 | 925 | 25 | 660 | Inventive example |
| 33 | 1260 | 925 | 30 | 660 | Inventive example |
| 34 | 1280 | 950 | 60 | 625 | Inventive example |
| 35 | 1280 | 950 | 100 | 625 | Inventive example |
| 36 | 1280 | 950 | 250 | 625 | Inventive example |
| 37 | 1280 | 950 | 100 | 625 | Inventive example |
| 38 | 1280 | 950 | 50 | 625 | Inventive example |
| 39 | 1210 | 890 | 60 | 610 | Inventive example |
| 40 | 1210 | 890 | 30 | 610 | Inventive example |
| *1) Average cooling rate (°C/s) from 850°C to 680°C after finsh rollong. **) Average cooling rate (°C/s) from 850°C to 680°C. | | | | | |

Specimens were taken from each hot-rolled steel sheet obtained as described above and were then subjected to microstructure observation, tensile testing, or hole expansion testing, whereby the area fraction of a ferrite phase, the type and area fraction of a microstructure other than the ferrite phase, the average grain size and volume fraction of Ti carbides, the amount of solute B, the tensile strength, the elongation, and the hole expanding ratio (stretch-flange formability) were determined. The test methods were as described below.

(i) Microstructure observation

A specimen was taken from each obtained hot-rolled steel sheet. A cross section (L cross section) of the specimen that was parallel to the rolling direction of the specimen was polished, was corroded with nital, and was then photographed using an optical microscope (a magnification of 400x) and a scanning electron microscope (a magnification of 5,000x), whereby microstructure photographs were obtained. The microstructure photographs were used to determine the ferrite phase, the type of the microstructure other than the ferrite phase, and the area fraction thereof using an image analyzer.

A thin film prepared from the hot-rolled steel sheet was observed with a transmission electron microscope, whereby the average grain size and volume fraction of Ti carbides were determined.

The average grain size of the Ti carbides was determined in such a manner that a photograph obtained using the transmission electron microscope (a magnification of 340,000x) was used to measure 100 of the Ti carbides in five fields of view for maximum size d (the diameter of the largest of disc upper and lower surfaces) and the size (thickness) t of disc-shaped precipitates in a direction perpendicular to the disc upper or lower surface and the above-mentioned arithmetic mean (average grain size $d_{def}$) was determined.

The volume fraction of the Ti carbides was determined in such a manner that an AA electrolytic solution (an ethanol solution of acetylacetone and tetramethylammonium chloride) was used as an electrolytic solution, the weight of the Ti carbides was determined by extraction residue analysis, and the volume of the Ti carbides was determined by dividing the weight thereof by the density of the Ti carbides. The density of TiC was used as the density of the Ti carbides. Subsequently, the determined volume of the Ti carbides was divided by the volume of a matrix dissolved by the extraction residue analysis, whereby the volume fraction thereof was calculated.

The amount of solute B was determined in such a manner that the specimen was dissolved in a bromomethanol solution; oxynitrides and nitrides were subjected to filtration, extraction, and quantitative analysis; and the amount thereof was subtracted from the amount of B.

(ii) Tensile test

A JIS No. 5 tensile specimen (JIS Z 2201) having a tensile direction perpendicular to the rolling direction was taken from each obtained hot-rolled steel sheet and was subjected to tensile testing in accordance with JIS Z 2241, whereby the tensile strength (TS) and elongation (EL) thereof were measured.

(iii) Hole expanding test

A specimen (a size of 130 mm × 130 mm) was taken from each obtained hot-rolled steel sheet. A hole with an initial diameter $d_0$ of 10 mm φ was formed in the specimen by punching (a clearance equal to 12.5% of the thickness of the specimen). The specimen was subjected to a hole expanding test. The hole was expanded in such a manner that a conical punch with a top angle of 60 degrees was inserted into the hole from a punched side. The diameter d of the hole was measured at the point in time when a crack penetrated through the steel sheet (specimen). The hole expanding ratio thereof was calculated by the following equation:

$$\text{Hole expanding ratio } \lambda \ (\%) = \{(d - d_0) \ / \ d_0\} \times 100.$$

Obtained results are shown in Table 3.

All inventive examples provide hot-rolled steel sheets having high strength, a tensile strength TS of 780 MPa or more, an elongation EL of 20% or more, and excellent workability, a hole expanding ratio λ of 100% or more. In contrast, comparative examples which are outside the scope of the present invention cannot ensure predetermined high strength or sufficient hole expanding ratio.

[Table 3]

| Steel No. | Microstructure | | Solid solution B content (%) | Ti carbide | | Mechanical properties | | | Remarks |
|---|---|---|---|---|---|---|---|---|---|
| | Ferrite area fraction (%) | Other area fraction*2 (%) | | Average grain size (nm) | Volume fraction ($\times 10^{-3}$) | Tensile strength TS (MPa) | Elongation EL (%) | Hole expanding ratio $\lambda$ (%) | |
| 1 | 100 | 0 | 0.0023 | 3.0 | 0.2 | 379 | 44 | 145 | Comparative example |
| 2 | 100 | 0 | 0.0022 | 3.1 | 3.9 | 801 | 22 | 120 | Inventive example |
| 3 | 100 | 0 | 0.0022 | 3.0 | 4.2 | 805 | 21 | 120 | Inventive example |
| 4 | 100 | 0 | 0.0020 | 3.3 | 4.4 | 810 | 21 | 115 | Inventive example |
| 5 | 83 | P:17 | 0.0021 | 3.0 | 4.4 | 679 | 25 | 35 | Comparative example |
| 6 | 98 | P:2 | 0.0000 | 12.0 | 1.3 | 805 | 21 | 65 | Comparative example |
| 7 | 100 | 0 | 0.0007 | 3.4 | 3.9 | 802 | 20 | 115 | Inventive example |
| 8 | 100 | 0 | 0.0019 | 3.6 | 3.9 | 805 | 20 | 110 | Inventive example |
| 9 | 99 | P:1 | 0.0027 | 3.5 | 3.9 | 806 | 21 | 110 | Inventive example |
| 10 | 50 | P:50 | 0.0003 | 3.5 | 1.4 | 659 | 21 | 55 | Comparative example |
| 11 | 88 | P:12 | 0.0000 | = | = | 455 | 28 | 45 | Comparative example |
| 12 | 85 | P:15 | 0.0013 | 2.9 | 1.3 | 580 | 26 | 65 | Comparative example |
| 13 | 98 | P:2 | 0.0012 | 3.1 | 3.1 | 795 | 23 | 100 | Inventive example |

| Steel No. | Microstructure | | Solid solution B content (%) | Ti carbide | | Mechanical properties | | | Remarks |
|---|---|---|---|---|---|---|---|---|---|
| | Ferrite area fraction (%) | Other area fraction*2 (%) | | Average grain size (nm) | Volume fraction (× 10⁻³) | Tensile strength TS (MPa) | Elongation EL (%) | Hole expanding ratio λ (%) | |
| 14 | 100 | 0 | 0.0012 | 3.1 | 5.2 | 880 | 20 | 100 | Inventive example |
| 15 | 100 | 0 | 0.0013 | 15.0 | 5.4 | 644 | 22 | 50 | Comparative example |
| 16 | 100 | 0 | 0.0020 | 3.1 | 6.1 | 869 | 20 | 110 | Inventive example |
| 17 | 100 | 0 | 0.0021 | 3.2 | 6.2 | 871 | 20 | 100 | Inventive example |
| 18 | 91 | P:9 | 0.0020 | 3.1 | 6.1 | 751 | 19 | 60 | Comparative example |
| 19 | 100 | 0 | 0.0015 | 3.5 | 5.4 | 815 | 21 | 120 | Inventive example |
| 20 | 85 | P:15 | 0.0016 | 11.0 | 1.3 | 710 | 19 | 50 | Comparative example |
| 21 | 95 | P:5 | = | 12.0 | 1.2 | 580 | 30 | 85 | Comparative example |
| 22 | 65 | B:35 | = | 5.2 | 3.5 | 825 | 18 | 85 | Comparative example |
| 23 | 99 | P:1 | = | 6.0 | 4.6 | 745 | 22 | 60 | Comparative example |
| 24 | 100 | 0 | 0.0010 | 3.1 | 3.2 | 825 | 21 | 101 | Inventive example |
| 25 | 100 | 0 | 0.0010 | 3.2 | 3.2 | 830 | 20 | 100 | Inventive example |
| 26 | 100 | 0 | 0.0009 | 3.2 | 3.1 | 831 | 20 | 112 | Inventive example |

(continued)

| Steel No. | Microstructure | | Solid solution B content (%) | Ti carbide | | Mechanical properties | | | Remarks |
|---|---|---|---|---|---|---|---|---|---|
| | Ferrite area fraction (%) | Other area fraction*2 (%) | | Average grain size (nm) | Volume fraction ($\times 10^{-3}$) | Tensile strength TS (MPa) | Elongation EL (%) | Hole expanding ratio $\lambda$ (%) | |
| 27 | 100 | 0 | 0.0012 | 3.3 | 3.1 | 832 | 20 | 108 | Inventive example |
| 28 | 100 | 0 | 0.0009 | 3.1 | 3.2 | 831 | 20 | 109 | Inventive example |
| 29 | 100 | 0 | 0.0012 | 3.1 | 3.1 | 829 | 21 | 102 | Inventive example |
| 30 | 100 | 0 | 0.0023 | 3.5 | 4.2 | 843 | 22 | 105 | Inventive example |
| 31 | 100 | 0 | 0.0021 | 3.5 | 4.4 | 844 | 21 | 110 | Inventive example |
| 32 | 100 | 0 | 0.0022 | 3.6 | 4.3 | 842 | 20 | 122 | Inventive example |
| 33 | 100 | 0 | 0.0020 | 3.6 | 4.2 | 844 | 20 | 112 | Inventive example |
| 34 | 100 | 0 | 0.0016 | 2.9 | 3.6 | 825 | 20 | 108 | Inventive example |
| 35 | 100 | 0 | 0.0017 | 2.8 | 3.6 | 822 | 21 | 104 | Inventive example |
| 36 | 100 | 0 | 0.0016 | 3.0 | 3.7 | 821 | 20 | 118 | Inventive example |
| 37 | 100 | 0 | 0.0017 | 3.1 | 3.5 | 823 | 20 | 110 | Inventive example |
| 38 | 100 | 0 | 0.0016 | 3.1 | 3.6 | 825 | 20 | 109 | Inventive example |
| 39 | 100 | 0 | 0.0007 | 3.3 | 3.1 | 795 | 20 | 100 | Inventive example |

| Steel No. | Microstructure | | Solid solution B content (%) | Ti carbide | | Mechanical properties | | | Remarks |
|---|---|---|---|---|---|---|---|---|---|
| | Ferrite area fraction (%) | Other area fraction*2 (%) | | Average grain size (nm) | Volume fraction ($\times 10^{-3}$) | Tensile strength TS (MPa) | Elongation EL (%) | Hole expanding ratio $\lambda$ (%) | |
| 40 | 100 | 0 | 0.0008 | 3.3 | 3.1 | 800 | 21 | 102 | Inventive example |
| *2) P is pearlite and B is bainite. | | | | | | | | | |

## Claims

1. A high strength hot-rolled steel sheet with excellent stretch-flange formability, having a composition consisting of, on a mass basis, more than 0.035% to 0.055% C, 0.2% or less Si, 0.35% or less Mn, 0.03% or less P, 0.03% or less S, 0.1% or less Al, 0.01% or less N, 0.08% to 0.25% Ti, and 0.0005% to 0.0035% B, solute B being 0.0005% or more, and optionally in total 1.0% or less of one or more of REMs, Zr, Nb, V, As, Cu, Ni, Sn, Pb, Ta, W, Mo, Cr, Sb, Mg, Ca, Co, Se, Zn, and Cs, the remainder being Fe and unavoidable impurities; a matrix containing a ferrite phase having an area fraction of more than 95%; a microstructure in which Ti carbides having an average grain size of less than 10 nm are finely precipitated in grains of the ferrite phase and the volume fraction of the Ti carbides is 0.0015 to 0.007; and a tensile strength of 780 MPa or more.

2. The high strength hot-rolled steel sheet according to Claim 1, including a plating layer on a surface of a steel sheet.

3. A method for manufacturing the high strength hot-rolled steel sheet having excellent stretch-flange formability as defined in claim 1, comprising heating steel to an austenite single-phase zone, performing hot rolling including rough rolling and finish rolling, performing cooling after finish rolling is finished, performing coiling, and obtaining a hot-rolled steel sheet, wherein the steel has a composition consisting of, on a mass basis, more than 0.035% to 0.055% C, 0.2% or less Si, 0.35% or less Mn, 0.03% or less P, 0.03% or less S, 0.1% or less Al, 0.01% or less N, 0.08% to 0.25% Ti, and 0.0005% to 0.0035% B, and optionally in total 1.0% or less of one or more of REMs, Zr, Nb, V, As, Cu, Ni, Sn, Pb, Ta, W, Mo, Cr, Sb, Mg, Ca, Co, Se, Zn, and Cs, the remainder being Fe and unavoidable impurities; the finish rolling temperature during finish rolling is 850°C or higher; the average cooling rate during cooling is 10 °C/s or more; and the coiling temperature is 550°C to 680°C.

4. The high strength hot-rolled steel sheet-manufacturing method according to Claim 3, further comprising plating the hot-rolled steel sheet.

5. The high strength hot-rolled steel sheet-manufacturing method according to Claim 4, further comprising alloying the hot-rolled steel sheet subsequently to plating.

## Patentansprüche

1. Hochfestes, warmgewalztes Stahlblech mit ausgezeichneter Streckbördel-Verformbarkeit, das eine Zusammensetzung auf Massenbasis bestehend aus mehr als 0,035% bis 0,055% C, 0,2% oder weniger Si, 0,35% oder weniger Mn, 0,03% oder weniger P, 0,03% oder weniger S, 0,1% oder weniger Al, 0,01% oder weniger N, 0,08% bis 0,25% Ti und 0,0005% bis 0,0035% B, wobei gelöstes B 0,0005% oder mehr beträgt, und gegebenenfalls insgesamt 1,0% oder weniger von einem oder mehreren aus REMs, Zr, Nb, V, As, Cu, Ni, Sn, Pb, Ta, W, Mo, Cr, Sb, Mg, Ca, Co, Se, Zn und Cs, wobei der Rest Fe und unvermeidbare Verunreinigungen sind; eine Matrix, die eine Ferritphase mit einem Flächenanteil von mehr als 95% enthält; eine Mikrostruktur, in der Ti-Carbide mit einer durchschnittlichen Korngröße von weniger als 10 nm fein in den Körnern der Ferritphase ausgeschieden sind und der Volumenanteil der Ti-Carbide 0,0015 bis 0,007 beträgt; und eine Zugfestigkeit von 780 MPa oder mehr aufweist.

2. Hochfestes, warmgewalztes Stahlblech gemäß Anspruch 1, umfassend eine Plattierungsschicht auf einer Oberfläche eines Stahlblechs.

3. Verfahren zur Herstellung des hochfesten, warmgewalzten Stahlblechs mit ausgezeichneter Streckbördel-Verformbarkeit wie in Anspruch 1 definiert, umfassend das Erwärmen von Stahl auf eine Austenit-Einzelphasenzone, das Durchführen von Warmwalzen einschließlich Vorwalzen und Endwalzen, das Durchführen von Abkühlen nachdem das Endwalzen beendet ist, das Durchführen von Aufrollen und das Erhalten eines warmgewalzten Stahlblechs, worin der Stahl eine Zusammensetzung aufweist, auf Massenbasis bestehend aus mehr als 0,035% bis 0,055% C, 0,2% oder weniger Si, 0,35% oder weniger Mn, 0,03% oder weniger P, 0,03% oder weniger S, 0,1% oder weniger Al, 0,01% oder weniger N, 0,08% bis 0,25% Ti und 0,0005% bis 0,0035% B und gegebenenfalls insgesamt 1,0% oder weniger von einem oder mehreren aus REMs, Zr, Nb, V, As, Cu, Ni, Sn, Pb, Ta, W, Mo, Cr, Sb, Mg, Ca, Co, Se, Zn und Cs, wobei der Rest Fe und unvermeidbare Verunreinigungen sind; die Endwalztemperatur während des Endwalzens 850°C oder höher beträgt; die durchschnittliche Abkühlgeschwindigkeit während des Abkühlens 10°C/s oder mehr beträgt; und die Aufrolltemperatur 550°C bis 680°C beträgt.

4. Verfahren zur Herstellung eines hochfesten, warmgewalzten Stahlblechs gemäß Anspruch 3, ferner umfassend das Plattieren des warmgewalzten Stahlblechs.

5. Verfahren zur Herstellung eines hochfesten, warmgewalzten Stahlblechs gemäß Anspruch 4, ferner umfassend das Legieren des warmgewalzten Stahlblechs nach dem Plattieren.

**Revendications**

1. Tôle d'acier laminée à chaud de haute résistance dotée d'une excellente capacité à former des bords par étirage, ayant une composition constituée, sur une base massique, de plus de 0,035 % à 0,055 % de C, de 0,2 % ou moins de Si, de 0,35 % ou moins de Mn, de 0,03 % ou moins de P, de 0,03 % ou moins de S, de 0,1 % ou moins d'Al, de 0,01% ou moins de N, de 0,08 % à 0,25 % de Ti, et de 0,0005 % à 0,0035 % de B, un soluté B étant de 0,0005% ou plus, et éventuellement au total de 1,0 % ou moins d'un ou plusieurs de REM, Zr, Nb, V, As, Cu, Ni, Sn, Pb, Ta, W, Mo, Cr, Sb, Mg, Ca, Co, Se, Zn, et Cs, le restant étant du Fe et des impuretés inévitables ; une matrice contenant une phase de ferrite ayant une fraction superficielle de plus de 95 % ; d'une microstructure dans laquelle des carbures de Ti ayant une taille granulaire moyenne de moins de 10 nm sont finement précipités dans des grains de la phase de ferrite et la fraction volumique des carbures de Ti est de 0,0015 à 0,007 ; et une résistance à la traction de 780 MPa ou plus.

2. Tôle d'acier laminée à chaud de haute résistance selon la revendication 1, incluant une couche de placage sur une surface d'une tôle d'acier.

3. Procédé de fabrication de la tôle d'acier laminée à chaud de haute résistance dotée d'une excellente capacité à former des bords par étirage selon la revendication 1, comprenant le chauffage de l'acier dans une zone à phase unique d'austénite, la réalisation d'un laminage à chaud incluant une laminage grossier et un laminage de finition, la réalisation d'un refroidissement après avoir terminé le laminage de finition, la réalisation d'un bobinage, et l'obtention d'une tôle d'acier laminée à chaud, dans lequel l'acier a une composition constituée, sur une base massique, de plus de 0,035 % à 0,055 % de C, de 0,2 % ou moins de Si, de 0,35 % ou moins de Mn, de 0,03 % ou moins de P, de 0,03 % ou moins de S, de 0,1 % ou moins d'Al, de 0,01% ou moins de N, de 0,08 % à 0,25 % de Ti, et de 0,0005 % à 0,0035 % de B, et éventuellement au total de 1,0 % ou moins d'un ou plusieurs de REM, Zr, Nb, V, As, Cu, Ni, Sn, Pb, Ta, W, Mo, Cr, Sb, Mg, Ca, Co, Se, Zn et Cs, le restant étant du Fe et des impuretés inévitables ; la température de laminage de finition au cours du laminage de finition est de 850 °C ou plus; le taux de refroidissement moyen au cours du refroidissement est de 10°C/s ou plus ; et la température de bobinage est de 550 °C à 680 °C.

4. Procédé de fabrication d'une tôle d'acier laminée à chaud de haute résistance selon la revendication 3, comprenant en outre le placage de la tôle d'acier laminée à chaud.

5. Procédé de fabrication d'une tôle d'acier laminée à chaud de haute résistance selon la revendication 4, comprenant en outre l'alliage de la tôle d'acier laminée à chaud à la suite du placage.

FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6172924 A
- JP 2000328186 A
- JP 8073985 A
- JP 6200351 A
- JP 2002322539 A
- EP 1327695 A1